# EUROPÄISCHE PATENTSCHRIFT

(11) **EP 0 511 611 B1**
(45) Veröffentlichungstag und Bekanntmachung des Hinweises auf die Patenterteilung: **28.02.1996**
(21) Anmeldenummer: 92107139.5
(22) Anmeldetag: 27.04.1992
(51) Int. Cl.: A01N 57/20, A01N 25/30

(54) **Flüssige herbizide Mittel**
Liquid herbicidal compositions
Compositions herbicides liquides

(30) Priorität: 27.04.1991 DE 4113867
(43) Veröffentlichungstag der Anmeldung: 04.11.1992
(73) Patentinhaber: Hoechst Schering AgrEvo GmbH, D-13342 Berlin (DE)
(72) Erfinder: Kocur, Jean, Dr., W-6238 Hofheim am Taunus (DE); Maier, Thomas, Dr., W-6000 Frankfurt/M (DE); Langelüddeke, Peter, Dr., W-6238 Hofheim am Taunus (DE); Hess, Martin, Dr., W-6500 Mainz (DE)

(56) Entgegenhaltungen:
- EP-A- 0 048 436
- EP-A- 0 317 260
- DE-A- 3 809 159

## Beschreibung

Die Erfindung betrifft neue Formulierungen von Glufosinate-ammonium, dem Ammoniumsalz des 4-[Hydroxy(methyl)phosphinoyl]-D,L-homoalanin (I) 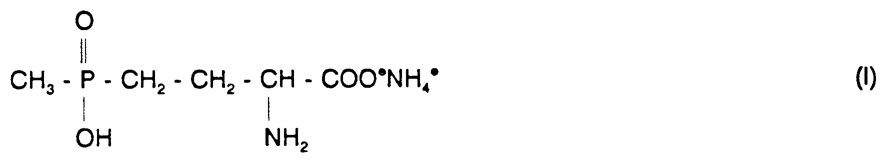
Aus US-Patent 4 168 963 und aus Z. Pfl.Krankh. Pfl. Schutz, Sonderheft IX, 431-440, 1981 ist bekannt, daß die Verbindung der Formel I eine gute und breite Wirksamkeit gegen Unkräuter vieler botanischer Familien besitzt.

Die Formel I umfaßt alle Stereoisomeren (D- und L-Form), vorzugsweise das biologisch aktive L-Enantiomere sowie Stereoisomerengemische einschließlich des Racemats.

Aus der EP-A-0048436 ist bekannt, daß Cocosfettalkyl-benzyldimethylammoniumchlorid oder (C₁₂-C₁₈)-Alkylpolyglykolethersulfate die Wirkung von I verstärken. Allerdings sind die wäßrigen flüssigen Formulierungen von I nur stabil, wenn ihnen polare Lösungsmittel, wie Dimethylformamid, N-Methylpyrrolidon oder Ethylenglykolmonomethylether zugesetzt werden. Andernfalls treten in den Formulierungen Phasentrennungen in wirkstoffangereicherte, tensidärmere und wirkstoffärmere, tensidangereicherte Schichten ein. Die Anwendung der genannten Lösungsmittel ist besonders bei Formulierungen mit hohen Gehaften an (C₁₂-C₁₈)-Fettalkoholpolyglykolethersulfaten notwendig.

Wegen der insbesondere unter toxikologischen Gesichtspunkten zunehmend kritischen Beurteilung von Lösungsmitteln kann deren Anwendung in höheren Konzentrationen nachteilig sein.

Formulierungen des Wirkstoffes I sollten daher lösungsmittelfrei sein oder nur geringe Anteile an Lösungsmitteln enthalten.

Ferner hat sich gezeigt, daß die Kältestabilität der der aus dieser EP-A bekannten Formulierungen besonders bei hohen Gehalten an Tensid für die Erfordernisse der Praxis oftmals unzureichend ist.

Zwar fallen Wirkstoff und Netzmittel erst unterhalb von 0°C aus, dennoch treten beim Abfüllen von Großgebinden, die bei Frost gelagert wurden, in Kleingebinde Handhabungsschwierigkeiten auf, weil diese Gebinde erst längere zeit warm gelagert und das Produkt dann homogenisiert werden muß.

Formulierungen des Wirkstoffs I sollten daher auch bei Temperaturen unter 0°C noch homogen und leicht beweglich sein.

Überraschenderweise wurde nun gefunden, daß sich Formulierungen mit sehr geringem Lösungsmittelgehalt und sogar lösungsmittelfreie Formulierungen des Wirkstoffs I mit hoher Kältestabilität und guter biologischer Wirkung durch die Verwendung bestimmter Tenside oder Tensidgemische herstellen lassen.

Die Erfindung betrifft daher flüssige herbizide Mittel, welche eine Verbindung der Formel I in Form des Stereoisomerengemisches oder des L-Enantiomeren und ein Tensid aus der Reihe der (C₈-C₁₄)-Alkylpolyglycoside
gegebenenfalls in Mischung mit
- (C₁₀-C₁₈)-Fettalkoholpolyglykolethersulfaten,
- (C₁₂-C₁₈)-Alkyldimethylaminoxiden,
- (C₁₀-C₁₈)-Alkyl-dimethylbenzylammoniumchlorid und/oder
- Cocosalkyldimethylaminoessigsäure (Betain)enthalten,
wobei im Falle der Ethersulfate die Alkali-, Ammonium- oder Erdalkalisalze verwendet werden können.

Die erfindungsgemäßen Mittel enthalten in in Wasser gelöster Form 0.5 bis 40 Gew.-%, vorzugsweise 1 bis 30 Gew.-% des Wirkstoffes der Formel I sowie 0,5 bis 8 Teile der erfindungsgemäßen Tenside pro Wirkstoffteil und 0 bis 10 Gew.-% eines wassermischbaren, für die Anwendung im Pflanzenschutz unbedenklichen Lösungsmittels, wie Methylglykol, Propylenglykolmonomethylether, PEG 200, Isopropanol, DMF oder NMP.

Im Falle einer Mischung von Alkylpolyglycosid mit wenigstens einem Tensid aus der Reihe (C₁₀-C₁₈)-Fettalkoholpolyglykolethersulfat, (C₁₂-C₁₈)-Alkyldimethylaminoxid, (C₁₀-C₁₈)-Alkyl-dimethylbenzylammoniumchlorid und Cocosalkyldimethylaminoessigsäure beträgt der Anteil Alkylpolyglycosid vorzugsweise nicht mehr als 50 Gew.-% des gesamten Tensidgehaltes.

Den erfindungsgemäßen Mittel können bis zu 25 Gew.-%, vorzugsweise bis zu 15 Gew.-% weiterer handelsüblicher Hilfsmittel, z.B. oberflächenaktive Mittel, wie Netzmittel, Dispergiermittel und Mittel zur Verbesserung des Haftvermögens, Entschäumer, Konservierungsmittel und Frostschutzmittel zugesetzt werden.

Als zusätzliche Netz- und Dispergiermittel kommen beispielsweise Tributylphenolpolyglykolether, wie die ®Sapogenat T-Marken (Hoechst), Nonylphenolpolyglykolether, wie die ®Arkopal N-Marken (Hoechst) oder Isotridecanolpolyglykolether, wie die ®Genapol X-Marken (Hoechst) in Frage.

Geeignete Entschäumer sind beispielsweise solche aus der Gruppe der Perfluor-(C₆-C₁₈)-alkylphosphinsäuren bzw. -phosphonsäuren (siehe DE-A-4021336).

Wenn nötig, finden Konservierungsmittel, beispielsweise auf Formaldehyd-, Benzoesäure- und Triphenylzinn-Basis Verwendung, wie z. B. ®Kobate C.

Weiterhin können auch Frostschutzmittel, wie Harnstoff, Salze (z.B. Ammoniumsulfat), Polyole (z. B. Glykol, Propylenglykol oder Glycerin) oder Zucker zugesetzt werden.

Auch können die genannten Tenside vorteilhaft in Kombinationsformulierungen von I mit anderen herbiziden Wirkstoffen wie z.B. Atrazin, Linuron, Monolinuron, Isoproturon, Thidiazuron, Simazin, Diuron, Metolachtor, Oxyfluorfen, Bifenox, Imazethapyr, Imazethabenz, Imazaquin, Quizalofop-P-tefuryl (UBI-C 4874), Sulfonylharnstoffen, wie DPX-L-5300, Thiameturonmethyl, Metsulfuronmethyl oder Nicosulfuron (Ishihara) eingesetzt werden und dabei die Wirkung von I verstärken können.

Die Tenside können auch vor der Applikation unmittelbar der Spritzbrühe der Wirkstofflösung von I oder den Mischformulierungen mit den genannten Herbiziden zugesetzt werden. Die Erfindung betrifft auch die verdünnten Zubereitungen (Spritzbrühen), welche die Bestandteile der erfindungsgemäßen konzentrierten Zubereitungen in bis zu 500-fach verdünnter Form enthalten.

Die erfindungsgemäßen Mittel liegen als Lösungen, in Mischungen mit wasserunlöslichen Wirkstoffen wie z.B. den o.a. Triazin- und Harnstoffherbizid-Wirkstoffen als Suspensionskonzentrate vor, in welchen die unlöslichen Wirkstoffe in der festen, die Verbindung I und die erfindungsgemäßen Tenside in der wäßrigen flüssigen Phase enthalten sind. Niedrigschmelzende Wirkstoffe oder flüssige Wirkstoffe wie Metolachlor, Alachlor, Trifluralin, Ester der Phenoxyherbizide oder Ester von loxynil oder Bromoxynil werden mit einer Verbindung I und den Tensiden in Form einer stabilen Emulsion zubereitet, in welcher in der wäßrigen Phase die Verbindung I und die erfindungsgemäßen Tenside, in der "öligen" flüssigen Phase der wasserunlösliche flüssige oder der in organischen Lösungsmitteln gelöste Wirkstoff enthalten ist, wobei die organischen Lösungsmittel selbst nicht wasserlöslich sein sollten.

Die Herstellung derartiger Mischformulierungen kann auf verschiedene Weise erfolgen. Zum einen kann man so vorgehen, daß man die einzelnen Bestandteile separat in Form von Einzeldispersionen und Lösungen herstellt und diese dann unter Verwendung einer Kolloidmühle mischt. Ebenso ist es möglich, die Wirkstoffe der feindispersen Phase zusammen zu vermahlen und dieser Mischdispersion die Wirkstofflösung zuzusetzen. Prinzipiell kann man auch alle Wirkstoffe in einem Durchgang zur erwünschten Mischformulierung verarbeiten.

Die auf diese Weise hergestellten Kombinationsformulierungen sind lagerstabil, zeigen nahezu keine chemischen Veränderungen und sind anwendungstechnisch einfach zu handhaben.

Die erfindungsgemäßen Mittel werden im allgemeinen nach Verdünnen in Wasser appliziert, können aber auch unverdünnt angewandt werden.

Zur Herstellung der erfindungsgemäßen Mittel löst man den Wirkstoff in Wasser und setzt die errechnete Menge des wirkungsverstärkenden oberflächenaktiven Mittels und gegebenenfalls weitere übliche Hilfsmittel wie Lösungsvermittler (Propylenglykolmonomethylether, Glykole, Polyglykole, Blockpolymere, DMF, N-Methylpyrrolidon etc.), weitere Netzmittel, Farbstoffe oder Entschäumer (z.B. Silicone, Polyethylenpolypropylenglykole, Seifen etc.) zu und vermischt innig. Leichte Trübungen werden durch Filtration beseitigt.

Als Beispiele für die erfindungsgemäßen Tenside seien genannt:
- Fettalkohol C₈-C₁₀ Glucosid: ®Plantaren APG 225 (Henkel KG)
- Fettalkoholpolyglykolethersulfate:
   ®Genapol LRO, ®Genapol ARO, ®Genapol ZRO (Hoechst AG)
   ®Texapon ASV, ®Texapon Na, ®Texapon M (Henkel KG)
- (C₁₂-C₁₈)-Alkyldimethylaminoxide:
   ®Alkamox LO (Alkaril Chemicals)
   ®Genaminox (Hoechst AG)
- (C₁₀-C₁₈)-Alkyl-dimethyl-benzyl-ammoniumchlorid:
   ®Dodigen-Marken (Hoechst AG)
- Cocosalkyldimethylaminoessigsäure: ®Alkazeric CB (Alkaril Chemicals).

Die nachfolgenden Beispiele der Tabelle 1 dienen zur Erläuterung der Erfindung ohne daß diese darauf beschränkt wäre (%-Angaben sind in Gew.-%).

Verwendete Abkürzungen:

| | |
|---|---|
| Prop.M. | Propylenglykolmonomethylether |
| WAS | waschaktive Substanz |
| org.LM | organisches Lösungsmittel |
| M.Glyk. | Methylglykol |

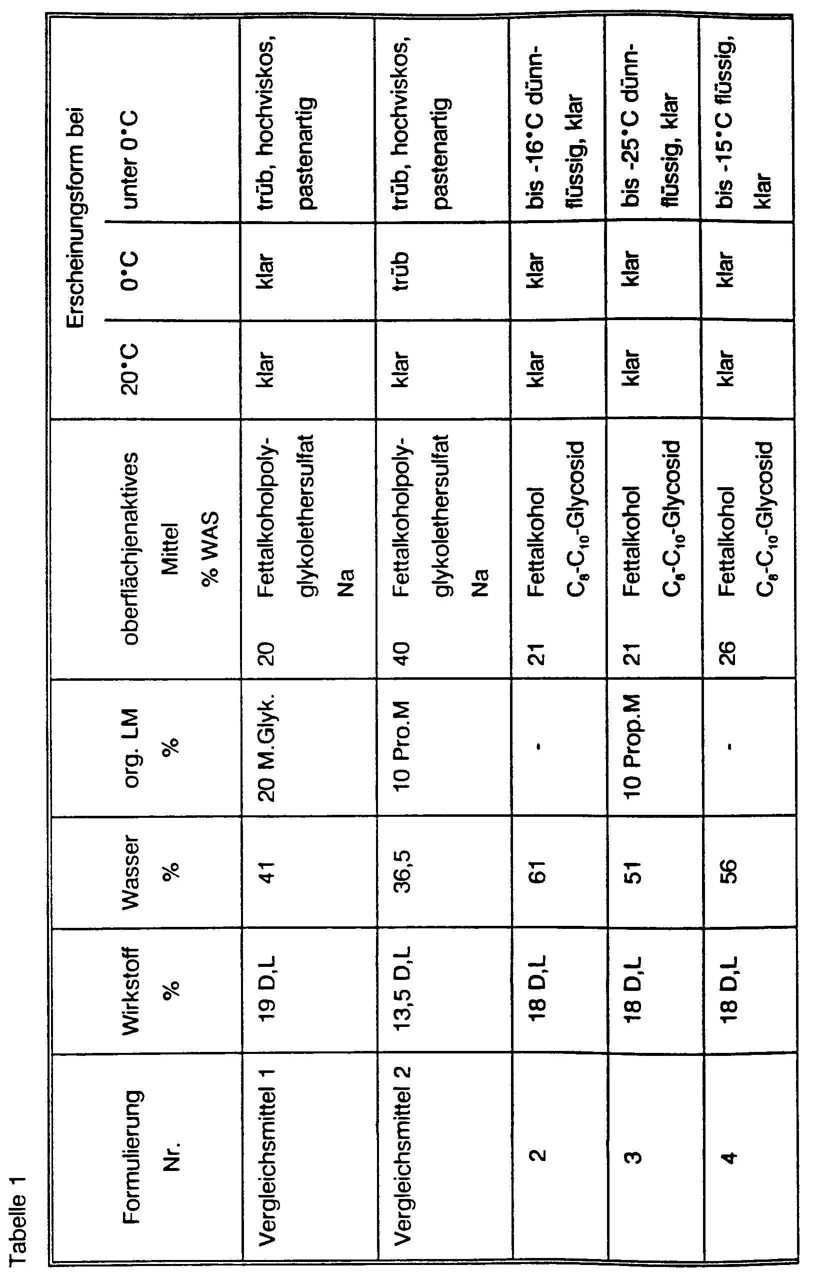

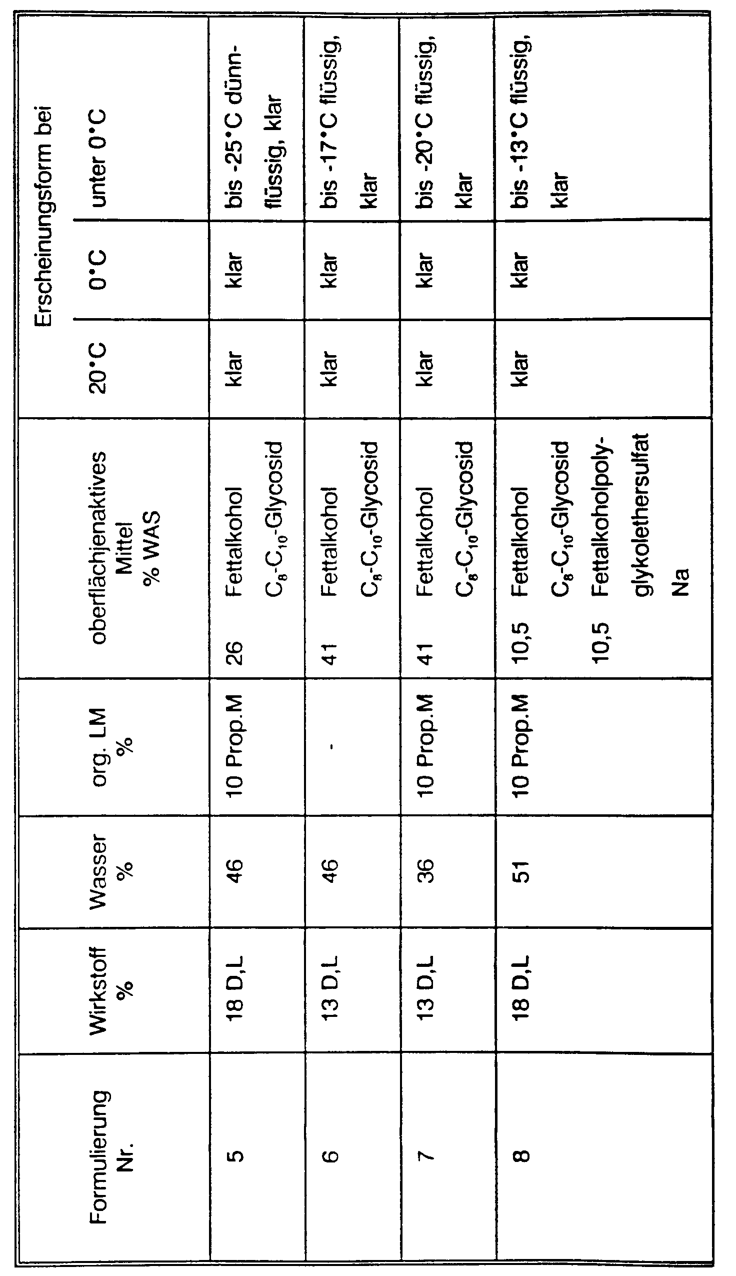

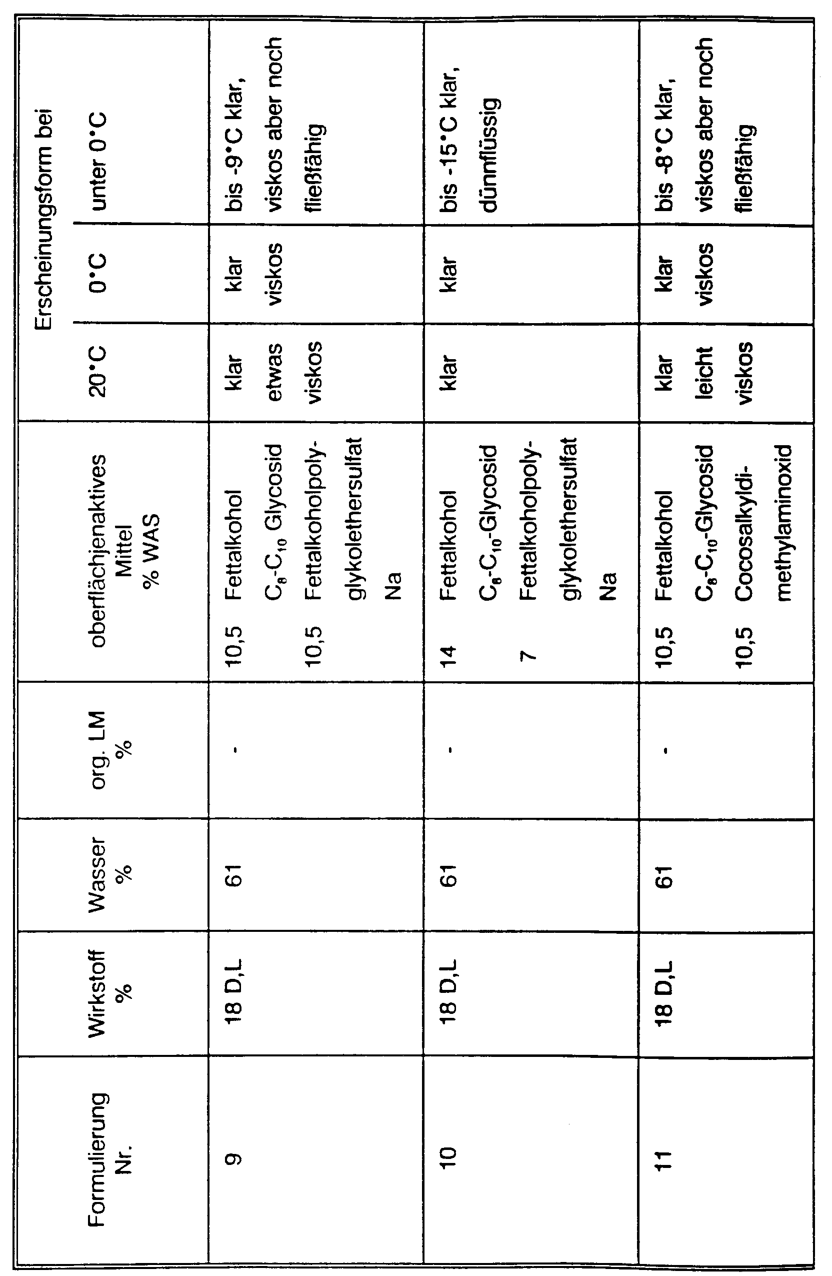

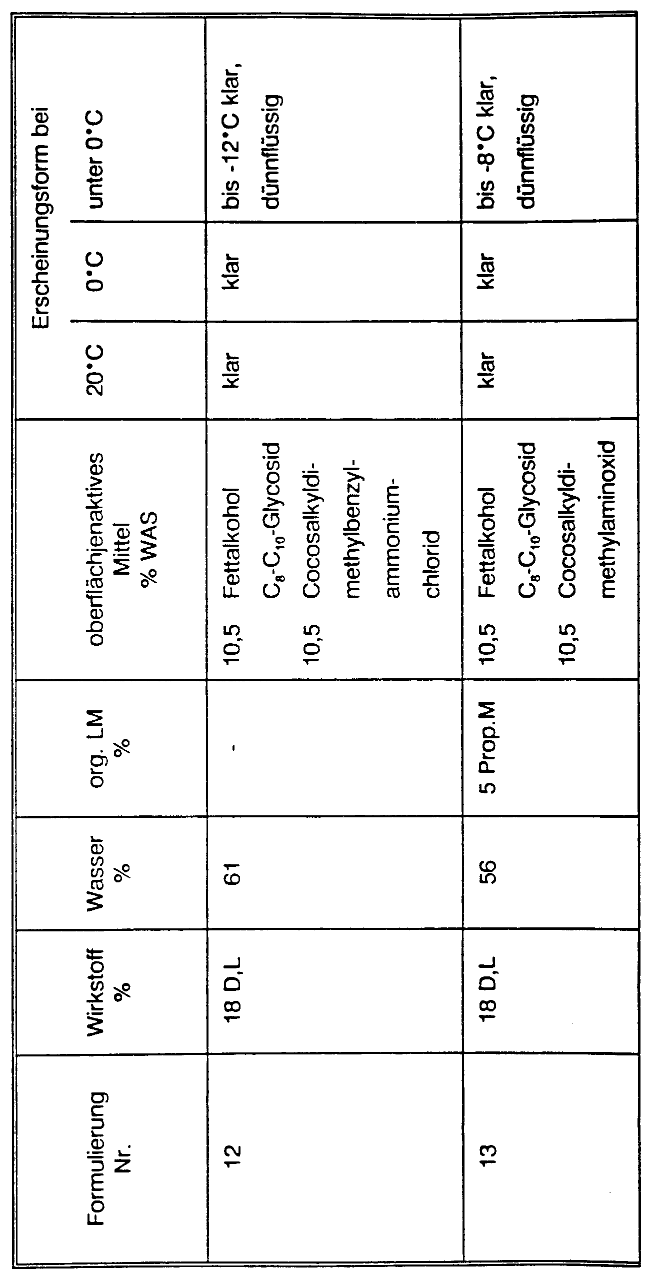

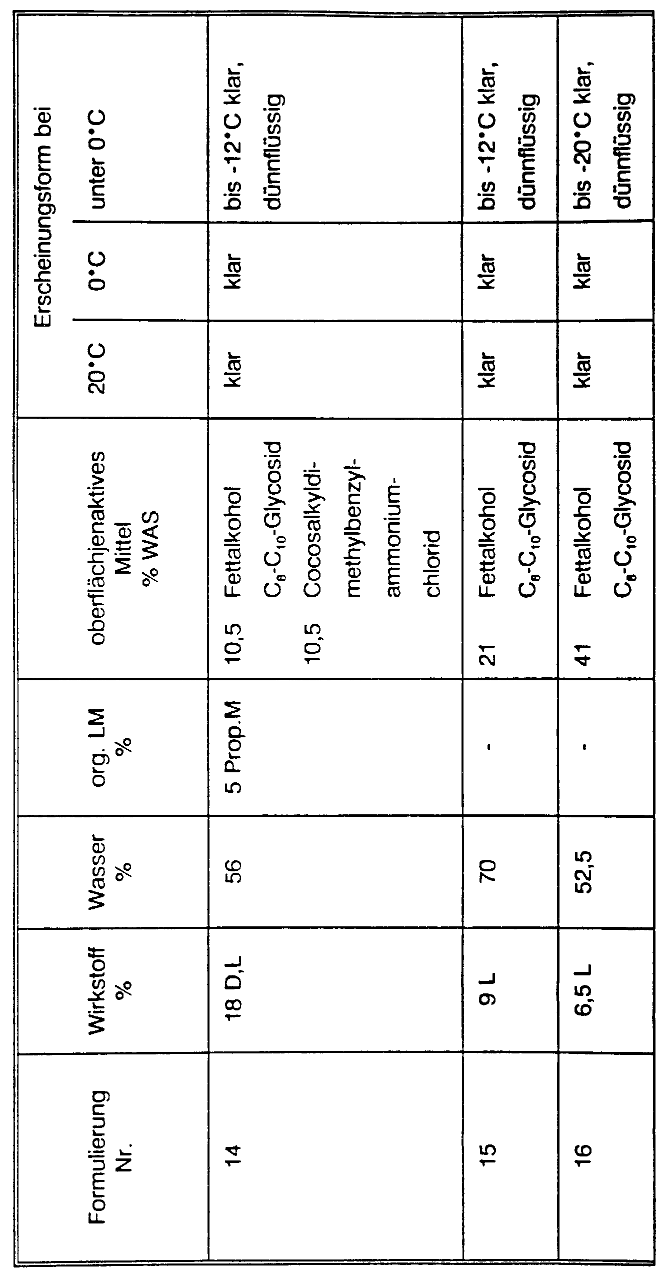

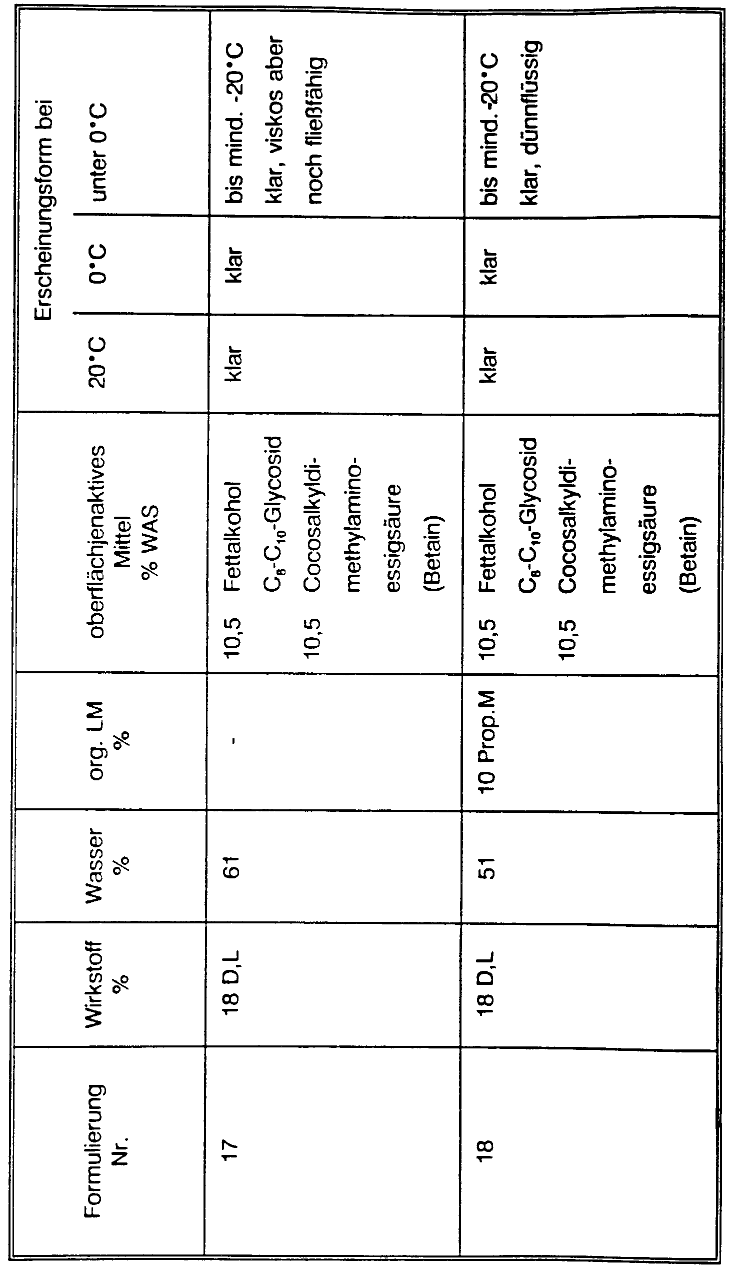

### B) Biologische Beispiele

Im Gewächshaus angezogene Pflanzen von Sommergerste und Sommerweizen wurden im 3-Blattstadium mit in Wasser verdünnten Formulierungen in den in der Tabelle 2 angegebenen Wirkstoffkonzentrationen besprüht. Als Standard diente das in Tabelle 1 aufgeführte Vergleichsmittel 1. Nach 14 Tagen wurde eine Bonitur der Pflanzen vorgenommen. Die Schädigung (Wirkung) ist in % ausgedrückt, die Ergebnisse sind in Tabelle 2 aufgeführt.

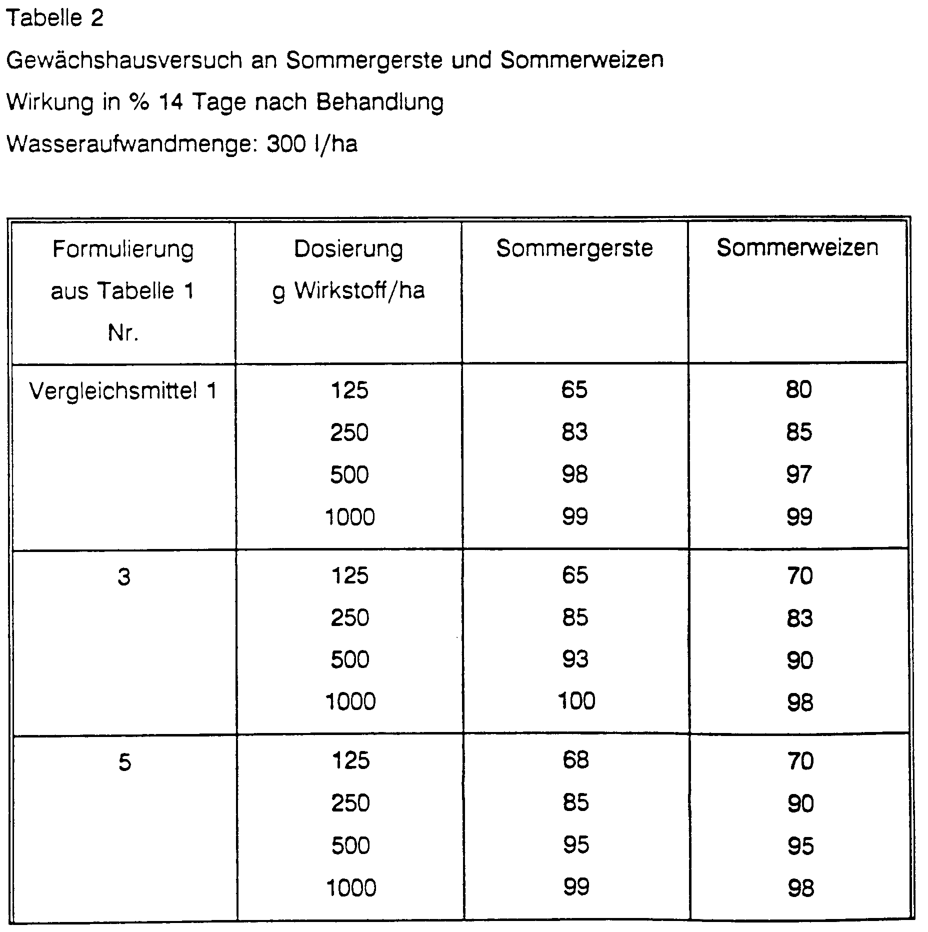

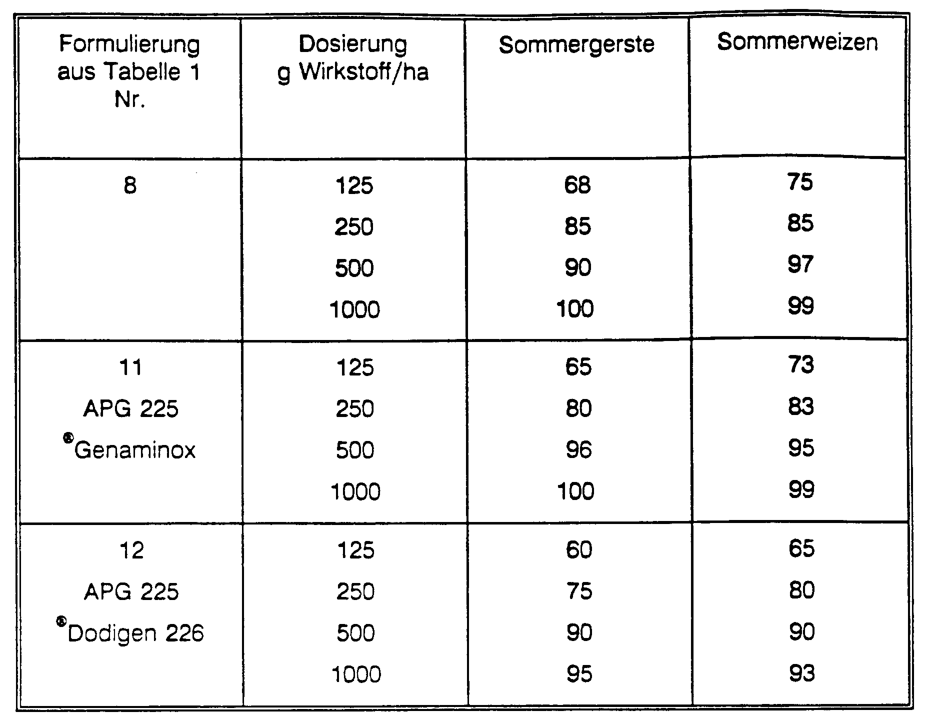

## Patentansprüche

1. Flüssige herbizide Mittel enthaltend eine Verbindung der Formel I 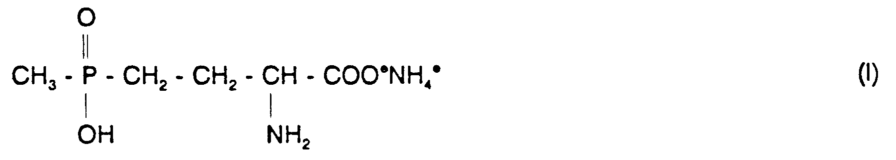 in Form des Stereoisomerengemisches oder des L-Enantiomeren und ein Tensid aus der Reihe der (C₈-C₁₄)-Alkylpolyglycoside.

2. Mittel gemäß Anspruch 1, zusätzlich enthaltend mindestens ein Tensid aus der Reihe
- (C₁₀-C₁₈)-Fettalkoholpolyglykolethersulfat,
- (C₁₂-C₁₈)-Alkyldimethylaminoxid,
- (C₁₀-C₁₈)-Alkyl-dimethylbenzylammoniumchlorid und
- Cocosalkyldimethylaminoessigsäure (Betain)
wobei im Falle der Ethersulfate die Alkali-, Ammonium- oder Erdalkalisalze verwendet werden können.

3. Mittel gemäß Anspruch 1 oder 2, welches 0,5 bis 40 Gew.-% Wirkstoff der Formel I enthält.

4. Mittel gemäß einem der Ansprüche 1 bis 3, welches 1 bis 30 Gew.-% Wirkstoff der Formel I enthält.

5. Mittel gemäß einem der Ansprüche 1 bis 4, in welchem der Anteil der in den Ansprüchen 1 oder 2 definierten Tenside bzw. Tensidmischung 0,5 bis 8 Gew.-% pro Wirkstoffteil beträgt.

6. Mittel gemäß einem der Ansprüche 1 bis 5, welches 0 bis 10 % eines wassermischbaren Lösungsmittel enthält.

7. Mittel gemäß einem der Ansprüche 1 bis 6, in welchem der Anteil an Alkylpolyglycosid in der gemäß Anspruch 2 definierten Tensidmischung nicht mehr als 50 Gew.-% beträgt.

8. Mittel gemäß einem der Ansprüche 1 bis 7, welches weitere handelsübliche Hilfsmittel, oberflächenaktive Mittel, Netzmittel, Dispergiermittel, Mittel zur Verbesserung des Haftvermögens, Entschäumer, Konservierungsmittel und/oder Frostschutzmittel enthält.

9. Mittel gemäß einem der Ansprüche 1 bis 8, welches zusätzlich mindestens einen weiteren herbiziden Wirkstoff enthält.

10. Verfahren zur Herstellung einer gemäß einem der Ansprüche 1 bis 9 definierten Zubereitung, dadurch gekennzeichnet, daß man man den Wirkstoff der Formel I in Wasser auflöst und setzt die errechnete Menge des oberflächenaktiven Mittels und gegebenenfalls weitere Hilfs- und Zusatzstoffe zusetzt und alles innig vermischt.

11. Verwendung eines wie im Anspruch 1 definierten Tensids oder einer wie im Anspruch 2 definierten Tensidmischung als Zusatz zu Formulierungen, die einen Wirkstoff der Formel I und gegebenfalls weitere herbizide Wirkstoffe enthalten.

12. Verwendung einer Zubereitung gemäß einem der Ansprüche 1 bis 9 zur Bekämpfung von unerwünschtem Pflanzenwuchs.

13. Verfahren zur Bekämpfung von unerwünschtem Pflanzenwuchs, dadurch gekennzeichnet, daß man eine Zubereitung gemäß einem der Ansprüche 1 bis 9 auf Pflanzen, Pflanzensamen oder die Anbaufläche appliziert.

## Claims

1. A liquid herbicidal composition comprising a compound of the formula I 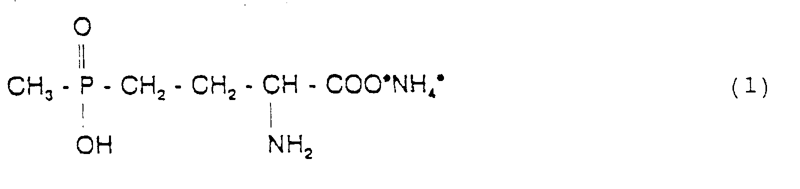 in the form of the stereoisomer mixture or of the L-enantiomer and a surfactant from the series of the (C₈-C₁₄)alkyl polyglycosides.

2. The composition as claimed in claim 1, additionally comprising at least one surfactant from the series
- (C₁₀-C₁₈)-fatty alcohol polyglycol ether sulfate,
- (C₁₂-C₁₈)alkyldimethylamine oxide,
- (C₁₀-C₁₈)alkyldimethylbenzylammonium chloride and
- coconut alkyldimethylaminoacetic acid (betaine), where, in the case of the ether sulfates, the alkali metal salts, ammonium salts or alkaline earth metal salts can be used.

3. The composition as claimed in claim 1 or 2, comprising 0.5 to 40 % by weight of active substance of the formula I.

4. The composition as claimed in one of claims 1 to 3, comprising 1 to 30 % by weight of active substance of the formula I.

5. The composition as claimed in one of claims 1 to 4, in which the amount of the surfactants, or surfactant mixture, defined in claim 1 or 2 is 0.5 to 8 % by weight per part of active substance.

6. The composition as claimed in one or claims 1 to 5, comprising 0 to 10 % of a water-miscible solvent.

7. The composition as claimed in one of claims 1 to 6, in which the amount of alkyl polyglycoside in the surfactant mixture as defined in claim 2 is not more than 50 % by weight.

8. The composition as claimed in one of claims 1 to 7, comprising further commercially available adjuvants, surfactants, wetting agents, dispersants, adhesion promoters, defoamers, preservatives and/or anti-freeze agents.

9. The composition as claimed in one of claims 1 to 8, additionally comprising at least one further herbicidal active substance.

10. A process for preparing a preparation as defined in one of claims 1 to 9, which comprises dissolving the active substance of the formula I in water, adding the calculated amount of the surfactant and, if appropriate, further adjuvants and additives, and mixing the batch intimately.

11. The use of a surfactant as defined in claim 1 or of a surfactant mixture as defined in claim 2 as an additive to formulations which comprise an active substance of the formula I and, if appropriate, further herbicidal active substances.

12. The use of a preparation as claimed in one of claims 1 to 9 for controlling undesired vegetation.

13. A method of controlling undesired vegetation, which comprises applying a preparation as claimed in one of claims 1 to 9 to plants, seeds of plants or to the area under cultivation.

## Revendications

1. Compositions herbicides liquides contenant un composé de formule I 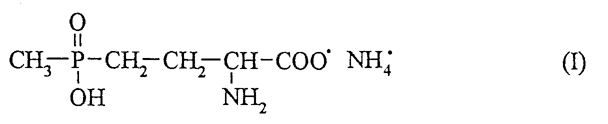 sous forme du mélange de stéréoisomères ou de l'énantiomère L, et un agent tensioactif de la série des polyglycosides d'alkyle en C₈-C₁₄.

2. Composition selon la revendication 1, contenant en outre au moins un agent tensioactif de la série
- des sulfates d'éthers d'alcools gras en C₁₀-C₁₈ de polyglycols,
- des oxydes d'alkyl en C₁₂-C₁₈-diméthylamines,
- des chlorures d'alkyl en C₁₀-C₁₈-diméthylbenzylammonium et/ou
- de l'acide (alkyl de coco)diméthylaminoacétique (bétaïne), les éthersulfates pouvant se trouver sous forme des sels de métaux alcalins, d'ammonium ou de métaux alcalino-terreux.

3. Composition selon la revendication 1 ou 2, contenant 0,5 à 40 % en masse de substance active de formule I.

4. Composition selon l'une des revendications 1 à 3, contenant 1 à 30 % en masse de substance active de formule I.

5. Composition selon l'une des revendications 1 à 4, dans laquelle la fraction d'agents tensioactifs ou de mélange d'agents tensioactifs définis dans les revendications 1 ou 2 représente 0,5 à 8 % en masse par partie de substance active.

6. Composition selon l'une des revendications 1 à 5, contenant 0 à 10 % d'un solvant miscible à l'eau.

7. Composition selon l'une des revendications 1 à 6, dans laquelle la teneur en polyglycoside d'alkyle du mélange d'agents tensioactifs défini dans la revendication 2 n'est pas supérieure à 50 % en masse.

8. Composition selon l'une des revendications 1 à 7, contenant d'autres agents auxiliaires, tensioactifs, mouillants, dispersants, agents améliorant l'adhérence, antimousses, conservateurs et/ou antigels, courants dans le commerce.

9. Composition selon l'une des revendications 1 à 8, contenant en outre au moins une autre substance herbicide.

10. Procédé de préparation d'une composition définie selon l'une des revendications 1 à 9, caractérisé en ce que l'on dissout la substance active de formule I dans de l'eau, on ajoute la quantité calculée de l'agent tensioactif et éventuellement d'autres agents auxiliaires et additifs, et on mélange bien le tout.

11. Utilisation d'un agent tensio-actif défini dans la revendication 1 ou d'un mélange d'agents tensio-actifs défini dans la revendication 2, comme adjuvant de formulations qui contiennent une substance active de formule I et éventuellement d'autres substances actives herbicides.

12. Utilisation d'une préparation selon l'une des revendications 1 à 9 pour la lutte contre la végétation nuisible.

13. Procédé de lutte contre la végétation nuisible caractérisé en ce qu'on applique une préparation selon l'une des revendications 1 à 9 aux plantes, aux grains ou à la surface cultivable.
